# EUROPEAN PATENT APPLICATION

(11) **EP 0 646 310 A1**
(43) Date of publication of application: **05.04.1995**
(21) Application number: 94202811.9
(22) Date of filing: 28.09.1994
(51) Int. Cl.: A01D 33/06, A01D 25/04

(54) **Root crop leaf puller**

(30) Priority: 30.09.1993 NL 9301688
(71) Applicant: STICHTING INSTITUUT VOOR MECHANISATIE ARBEID EN GEBOUWEN, NL-6700 AA Wageningen (NL)
(72) Inventor: Bouman, Aries, NL-6703 GR Wageningen (NL)
(74) Representative: de Bruijn, Leendert C.

(57) **Abstract**

Method for removing the leaf of root crop while the latter remain in the ground, particularly potato haulm, in which a tensile load is exerted on the leaf, this being a tensile load of varying magnitude. A varying load is, during pulling, exerted thereon in such a manner that the maximum tensile load of each following load variation is at a higher level than the preceding one. In particular, the direction of the load is substantially in the horizontal plane.

## Description

The invention relates to a method and a device for removing the leaf of root crop while the latter remain in the ground, particularly potato haulm. However, the invention is not limited strictly to the above field of application of removing the leaf of root crops while the latter remain in the ground, but can rather be used for pulling all types of leafs which are anchored in the ground by roots.

A leaf puller comprising two endless belts in a substantially horizontal plane is known from NL-A-7508386, in which the active parts which face each other determine a nip for clamping principally vertically upright leaf therebetween. By driving said parts in such a manner that they move backwards at a higher speed than that of the leaf puller moving forwards as a whole, said parts exert, on the leaf, a principally horizontal, rearwards-directed tensile force which, as a result of the displacement of said parts with respect to the initially stationary leaf, continually increases in a uniform manner until the breaking strain of the leaf is reached and said leaf will come free from the ground. The active parts of the puller belts are inclined upwardly towards the backward end, viewed in the direction of forward movement of the leaf puller, at about 5° with respect to the horizontal. Due to this slight inclination, the leaf comes free from the ground immediately after it is pulled, such that clogging of pulled leaf at the backward end of the leaf puller is prevented. It has been shown that there are still shortcomings when using the known leaf puller.

Firstly, there is the danger that, during pulling of the leaf, root crops are also pulled out of the ground, these subsequently being lost to harvesting. Secondly, not all the leaf is removed in a reliable manner.

From NL-C-85179 a leaf puller is known, also having two opposing driving belts in a common plane inclined to the horizontal, the active parts of which providing a nip for clamping leaf between them. The active parts are straight, and the width of the nip gradually decreases towards the beackward end, viewed in the direction of forward movement of the leaf puller. Due to the decreasing width of the nip, the leaf is only firmly held between the belts at the bachward end of the leaf puller, while in the forward end the belts slip along the leaf, such that the leaf will be erected. The inlination of the belts with respect to the horizontal is substantial larger than 10° and is such that leaf caught in the nip will be pulled principally vertically. There is no indication that the speed of the counter rotating belts is higher than the forward speed of the leaf puller when in action. The belts are mounted in a sub frame. At the forward end, the sub frame is pivotally connected to the main frame to swivel around a horizontal axis perpendicular to his lengthwise direction. At the backward end, the sub frame is connected to a puller rod, to move up and down in the vertical direction. With this leaf puller it is meant to have a sudden vertically directed tear at the leaf rather then a smoothly increasing pulling force. It is expected that with the sudden tear, the pulling of the leaf is improved such that no root crop is pulled with.

From FR-A-2 537 826 a device for lifting (harvesting) root crop, esepcially carrots, is known. It has two oppsing endless belts providing a nip for cathing the leafs, such that after lifting the root crop with a lifting knife digging in the ground, the harvest is entrained further hanging at its leaf. The belts are mounted in a sub frame oscillating sideways to remove earth sticking to the root crop after lifting from the ground. This document is not concerned with pulling leaf leaving the root crop in the ground.

DE-A-2912891 is concerned with seperating leaf from root crop after lifting. The root crop is moved obliquely upward through the device hanging at its leaf, gripped between two endless belts. A horizontal separation plate is brought between the root crop and the endless belts, the leaf projecting through a narrowing slit in the plate such that the root crop is retained in its upward movement. At their upper ends, the endless belts are guided by adjustable pulleys (12) to alter the bias of the belts. There is no indication whatsoever concerning an oscillating pulling force acting on the leaf.

The invention aims to provide an improved method and device for removing leaf, in which the root crops remain behind in the ground in a reliable manner and leaf remaining behind on the root crops is eliminated or reduced in a reliable manner.

To this end, according to the present invention, it is proposed to exert an increasing, oscillating or cyclic tensile load on the leaf, principally in the horizontal direction. The leaf puller device known from the above-mentioned NL-A can advantageously be adapted for carrying out the method according to the present invention. To this end, the pulling elements are, for example, mounted in a subframe which, with respect to the agricultural vehicle, can be moved to and fro as a whole in the horizontal plane.

None of the prior art documents neither suggest the cyclic changing tensile load, primarily in horizontal direction nor predict the surprising improvement of pulling leaf when applying this novel feature.

It was surprisingly found that the greatest effect with the method according to the present invention is achieved when there are at least two pulling force variations before the break force of the leaf is reached. Experiments have shown that the more cycles prior to break, the lower the break force will be. However, the difference of break force at five cycles or infinite cycles such that in practice it is best to apply no more then 5 to 10 cycles to a maximum, to get an optimum leaf puller with respect to break force, reliability and structural load. It is expected, that some fatigue is active in the leaf, such that it will be pulled apart at a load considerably lower compared to pulling with a continuous rising force. It will be obvious to the specialist how to adjust the frequency and amplitude of oscillation such that the desired amount of pulling force variations on the leaf is met.

It was found that the effect of the varying load is most favourable when after reaching a maximum, the load falls and then rises to a higher maximum. A further enhancement is met if the difference between the maximum and minimum load in each load cycle is at least 10% of the average load. The effect is particularly advantageous when said measure is in the region of more than 15%, preferably more than 20%. In principal it is possible, to have the pulling force back at zero during each load cycle. Since each next load maximum will be higher, the rising of the load to maximum will be steeper each time.

In stead of substantially horizontal directed endless pulling belts mounted in a sub frame oscillating forward and backward, the endless belts could be guided along non-circular, e.g. elliptic, pulleys, such that their speed will have a cyclic variation. If guided along circular pulleys, the pulleys could also be driven with a cyclic variation, with could be met by e.g. hydraulic power.

In stead of endless pulling belts, other pulling elements could be used, e.g. counterrotating elliptic shaped bodies of revolution.

The invention will be further described below on the basis of a non-limiting illustrative embodiment with reference to the drawings. In the drawings:

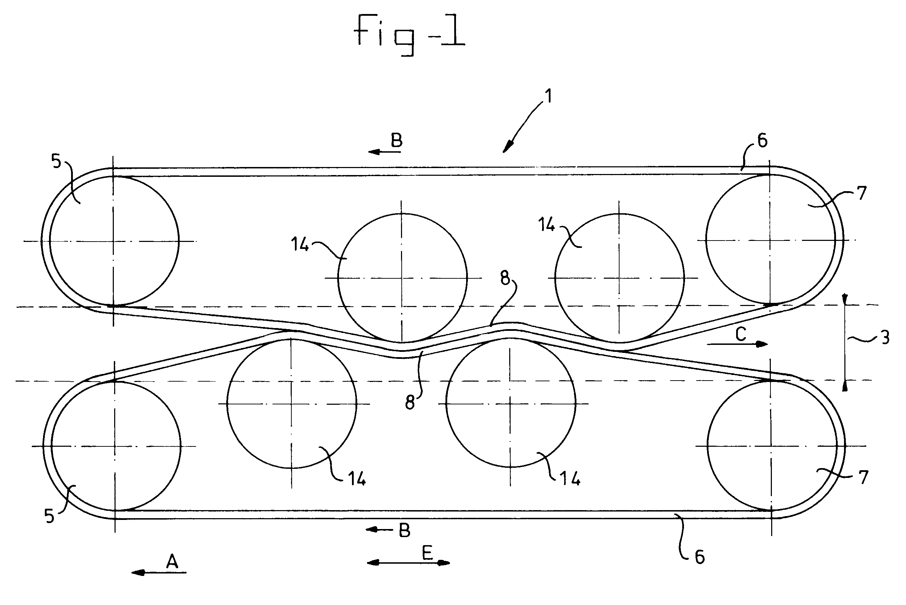

Fig. 1 shows, diagrammatically in plan view, a pair of pulling elements with guide rollers in the position that they take up within a frame of an agricultural vehicle which is not illustrated in greater detail here; and
Fig. 2 shows a side view of Fig. 1, in combination with root crop;
Fig. 3 shows a diagram of the load development according to the present invention and according to the prior art acting on the leaf.

The pair of pulling elements illustrated diagrammatically in the attached figures may, for example, be incorporated into a frame as shown and described in greater detail in NL-A-7508386. In this connection, specific reference is made to said NL application. In this case, for overall clarity, the frame of the agricultural vehicle has been omitted. A pair 1 of pulling elements is shown, which consists of two endless belts 6 which are guided around rotating discs 5,7. These rotating discs 5,7 may be placed on vertical axes (not illustrated) for mounting in a frame (not illustrated). For example, the rotating disc 7 may be driven and the rotating disc 5 stationary. The endless belts 6 determine, with the parts 8 which face each other, a nip between which leaf or haulm or other growth can be seized and on which said parts 8 can act with friction. In the illustrative embodiment shown here, said parts 8, which form the pulling elements, are jointly drawn in a zig-zag path by guide rollers 14 in order to clamp them together more solidly. The zig-zag path is such that it causes no or no considerable force cycle. However, it should be possible to yield a force variation in the leaf as acoorcing to the invention if the zig-zag path would be more pronounced. Obviously, the parts 8 may also be guided in a joint straight path, for example between a large number of guide rollers 14 placed at a distance from one another in the longitudinal direction of the parts 8, which form sets of rollers placed immediately opposite one another, which determine a nip between which the parts 8 move. Optionally, the guide rollers 14 may be adjustable in a resilient manner transverse to the longitudinal direction of the parts 8 for automatic adaptation to thicker and thinner crops which are moved along between the parts 8. In the illustrated example, the parts 8 are pushed against each other over a considerable length of the distance between the respective discs 5 and 7, in which range the leaf is firmly gripped and is subjected to the pulling force.

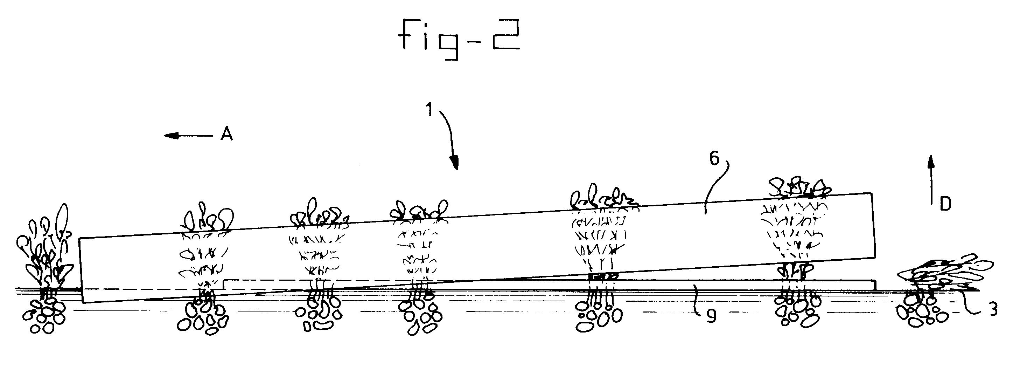

As illustrated in the side view according to Fig. 2, the endless belts 6 slope downwards with respect to the horizontal, relative to the direction of movement indicated with arrow A. The angle of inclination is typically about 5°, and no more then 10°. Furthermore, a sheet-type sole piece 9 is provided under each endless belt 6, as illustrated, which piece can rest on the substrate, usually the top of a ground ridge 3, such as, for example, is used in potato cultivation. These sole pieces leave a gap in between for free passage of the leaf.

In operation, the pair 1 is advanced over the land, in the direction of the arrow A, by means of a tractor which is not shown here in greater detail, whilst the endless belts 6 are driven round the rotating discs 5 and 7 in the direction of arrows B, in mutually opposite directions. In this arrangement, it is ensured that the forward speed of the pair in the direction of arrow A is slower than the absolute rotation speed of the endless belts 6, so that a net speed of the parts 8 results in the direction of arrow C, thus opposite to the direction of the arrow A. Consequently, the crop 10 is pulled in the direction of arrow C. The pulling force in the direction of arrow D (Fig. 2) as a result of the sloping position of the endless belts 6 with respect to the horizontal is rather small. The resultant of the force vectors C and D forms an angle of approximately 5° to 10° with the horizontal.

In addition, according to the invention, a translational to and fro movement according to the arrow E, parallel to the direction of advance according to the arrow A, is superposed, on movement of the endless belts 6. Dependent upon the size and stroke of said to and fro movement E, a tensile force will be exerted to a greater or lesser degree on the crop which is clamped between the parts 8. In practice, the speed of the additional cyclic movement is half to close to the forward speed of the leaf puller, which is usually about 7 km/hr.

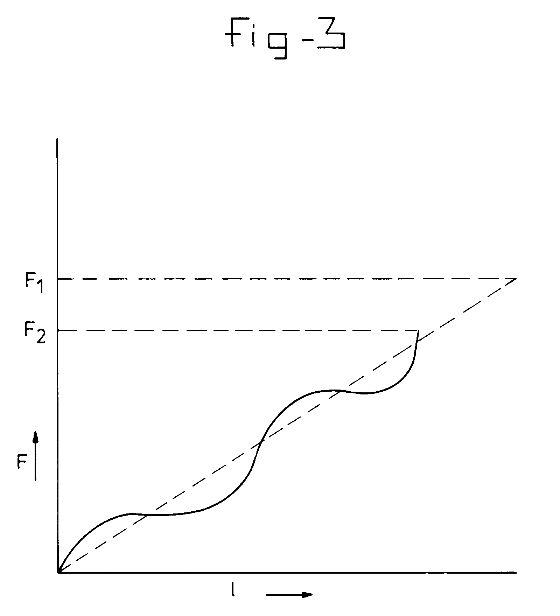

Fig. 3 shows an example of the stress development in the crop clamped between the parts 8, firstly on operation of the machine as described and shown in NL-A-75808386 (broken line), and on operation in accordance with the present invention. It is obvious that, through the operation of the known leaf puller, the load on the leaf clamped between the parts 8 increases uniformly in the case of parts 8 moving to an increasing degree past said leaf, until the load is reached which causes the leaf to give and to be pulled out of the ground. In this example, the speed of the additional cyclic movement is such that the load continuously rises to a maximum, which maximum is maintained for a moment due to the forward movement of the parts 8, whereafter the load continuously rises to a further maximum at a steeper rate due to beackward movement of the parts 8, while in the mean time the leaf puller as a whole keeps moving forward. Other load cycles are possibel too. On the one hand with falling load after reaching a maximum. On the other hand with variation of the speed of increase of the load, such that after reaching a maximum, the load stille increases however less steeper and then steeper untill a further maximum is reched.

When, according to the present invention, a to-and-fro movement is superposed on the continuous rearward movement of the parts 8 opposite to the direction A, the load on the leaf shows a wave motion with the peaks, for example, lying above and the valleys, for example, lying below the load line illustrated in dots, as measured during operation of the known leaf puller. The leaf will obviously give close to a load peak loading, in which case it was also found that said load (F2) is less than when the superposed to-and-fro movement is omitted (F1). By means of the pulling force which is lower in comparison with the prior art, the leaf can be gripped at a higher level. Consequently, the pulling elements do not have to operate close by or even stuck in the ground (as may be the case with cultivation ridges), as is the case according to the prior art. Obviously, in the case of extreme to-and-fro movement of the parts 8, the load on the leaf may repeatedly drop to zero, to rise again to a level which is higher each time. As well as mounting rotating discs 5, 7 in a subframe (not illustrated) which can move to and fro inside the leaf puller, an alternating accelerating and decelerating drive can, for example, be chosen for the rotating disc 5 in order, in so doing, to drive the belts 6 with a varying rotation speed, in order to achieve the effect intended with the invention.

Obviously, the method according to the present invention may also be carried out with another apparatus. For example, the Oldenhuis and Structural leaf pullers known per se can be made suitable for this purpose, which use two bodies of revolution bearing against each other, each of which rotates in the opposite direction from the other around central axes of rotation facing in the direction of movement of the leaf puller. By superposing, for example, on the rotational movement, an alternating acceleration and deceleration of rotation, or by moving the bodies of revolution to and fro parallel to the axes of rotation thereof, the same effect of a varying tensile force on the leaf can be achieved. The pulling belts may also be replaced by rubber belts rotating against each other principally in the horizontal plane and bearing against each other, or the like. Gripper bodies may also be used.

The important thing is that a cyclic changing or cyclic increasing pulling load grips the leaf in order, for example, to separate the leaf efficiently from the crops lying under the surface which are connected to it, such as tubers, in which case, preferably, said varying load shows a steadily increasing peak load.

## Claims

1. Method for removing the leaf of root crop while the latter remain in the ground, in particular potato haulm, in which a principally horizontal, increasing tensile load is exerted on the leaf, characterized in that the tensile load has a cyclic increase towards maximum at break of the leaf, such that the leaf will break under fatigue.

2. Method according to Claim 1, wherein, at each cycle the load drops from a maximum, while each next maximum is at a higher level.

3. Method according to claim 1 or 2, wherein there are at least two load cycles before break of the leaf.

4. Method according to claim 1 or 2, wherein there are at least three or four cycles, especially at least ten load cycles before break of the leaf.

5. Method according to any of the preceeding claims, wherein the load is inclined to the horizontal no more then 20°, preferably no more then 10°, especially no more then about 5°.

6. Method according to one of the preceding Claims, in which, in each load variation, the difference between the minimum and the maximum load is at least 10% of the average load.

7. Leaf puller for driving over a land area having driven pulling elements at some distance above the ground to grip and to exert a principally horizontal, increasing pulling force substantial parallel to the forward moving direction of the leaf puller on leaf growing above the ground, and free from elements for digging in the ground for possibly lifting root crop, characterized in that said pulling elements (6) are driven such that the pulling force will be cyclic increasing towards maximum at break of the leaf.

8. Leaf puller according to claim 7, in which the pulling elements are rotating or circulating bodies which are mounted in a sub frame to be moveable to and fro parallel to the direction of advance of the leaf puller (fig. 2).

9. Leaf puller according to claim 7, wherein the pulling elements are rotating or circulating bodies which are connected to a drive to be rotated or circulated at a cyclic changing speed.

10. Leaf puller according to claim 7, wherein the pulling elements are bodies of revolution with a non-circular shape, e.g. an elliptical shape.
